# EUROPEAN PATENT APPLICATION

(11) **EP 4 838 623 A1**
(43) Date of publication of application: **11.11.2026**
(21) Application number: 24932791.7
(22) Date of filing: 12.08.2024
(51) Int. Cl.: H01M 10/613, H01M 10/647, H01M 10/653, H01M 10/6554

(54) **BATTERY ASSEMBLY, BATTERY, AND ELECTRICAL APPARATUS**

(30) Priority: 27.03.2024 CN 202410364489
(71) Applicant: Contemporary Amperex Technology Co., Limited, Ningde, Fujian 352100 (CN)
(72) Inventor: LIN, Denghua, Ningde, Fujian 352100 (CN); LUO, Yan, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2024/111417
(87) International publication number: WO 2025/200229

(57) **Abstract**

Embodiments of the present disclosure provide a battery assembly, a battery, and an electrical apparatus. The battery assembly comprises a battery cell, an insulating film, a connecting member, and a thermal management sleeve member. The insulating film wraps around an outer surface of the battery cell, and the insulating film is provided with a communication hole penetrating through along the thickness direction of the insulating film. At least a portion of the connecting member is disposed in the communication hole. The connecting member is connected to the thermal management sleeve member and the battery cell. The battery assembly in the embodiments of the present disclosure is directly connected to the thermal management sleeve member and the battery cell by means of a connection in the communication hole, reducing the probability that the insulating film is damaged due to relative movement between the thermal management sleeve member and the battery cell, helping to improve the connection strength between the battery cell and the thermal management sleeve member, and making the relative position between the battery cell and the thermal management sleeve member more stable. Additionally, heat exchange between the thermal management sleeve member and the battery cell only passing through the connecting member is facilitated, thereby improving heat exchange efficiency.

## Description

### CROSS-REFERENCE TO RELATED APPLICATIONS

The present disclosure is based on and claims priority to Chinese Patent Application No. 202410364489.4, filed on March 27, 2024 and entitled "BATTERY ASSEMBLY, BATTERY, AND ELECTRICAL APPARATUS", the entire content of which is incorporated herein by reference.

### TECHNICAL FIELD

Embodiments of the present disclosure relate to the field of battery technologies, and in particular to a battery assembly, a battery, and an electrical apparatus.

### BACKGROUND

An outer surface of a battery cell is wrapped and adhered with an insulating film layer, commonly known as a blue film, and the insulating film protects and insulates the battery cell.

A large amount of heat is released during charging and discharging of a battery cell. To prevent the released heat from affecting the normal operation of the battery cell, a thermal management kit is generally adopted to absorb the heat released by the battery cell and thus cool the battery cell down.

In related technologies, the thermal management kit is attached to the insulating film. In other words, the thermal management kit is not directly connected to the battery cell.

During use of the battery, the thermal management kit is capable of displacing relative to the battery cell due to external vibration and other factors, which in turn creates a risk of the insulating film debonding as it is pulled between the two components.

### SUMMARY OF THE INVENTION

In view of this, embodiments of the present disclosure intend to provide a battery assembly, a battery, and an electrical apparatus, which are capable of improving connection strength between a thermal management kit and a battery cell.

To achieve the above objective, technical solutions of the embodiments of the present disclosure are implemented as follows.

The embodiments of the present disclosure provide a battery assembly, the battery assembly including:
a battery cell; and
an insulating film wrapping an outer surface of the battery cell, where the insulating film is provided with a communicating hole penetrating through in its thickness direction;
a connecting member at least partially arranged in the communicating hole; and
a thermal management kit, where the connecting member connects the thermal management kit to the battery cell.

The battery assembly in the embodiments of the present disclosure directly connects the thermal management kit to the battery cell through the connection in the communicating hole. On the one hand, this eliminates the need for the insulating film to be additionally connected to the thermal management kit, thereby reducing the probability that the insulating film is damaged due to a relative movement tendency generated between the thermal management kit and the battery cell, and being conducive to improving the connection strength between the battery cell and the thermal management kit, so that relative positions between the battery cell and the thermal management kit are more stable. On the other hand, this allows heat exchange between the thermal management kit and the battery cell to occur only through the connecting member, thereby being conducive to improving the efficiency of heat exchange.

In some embodiments, the outer surface of the battery cell includes a first wall surface, the insulating film wraps a portion of the first wall surface, and the insulating film wrapping the first wall surface encloses the communicating hole. In this way, there is no need to additionally open a hole in the insulating film. On the one hand, this helps improve the integrity of the insulating film, enhance the structural strength of the insulating film, and reduce the probability of the insulating film being torn by stretching during use of the battery. On the other hand, the communicating hole can be formed in the process of wrapping the battery cell with the insulating film, which helps improve production efficiency.

In some embodiments, the outer surface of the battery cell includes a second wall surface, the second wall surface is connected to the first wall surface, and the insulating film wraps the second wall surface and extends to the first wall surface, so that the insulating film covers a connection position between the first wall surface and the second wall surface. As such, a seam position between an inner wall of the communicating hole and the surface of the battery cell is located away from a connection position between two adjacent wall surfaces of the battery cell. This reduces the probability of the insulating film being easily detached from the outer surface of the battery cell due to a change in the curvature of the connection position between the two adjacent wall surfaces. At the same time, it eliminates the need for an edge of the insulating film to be aligned with the edges of various wall surfaces, which helps reduce dimensional accuracy requirements of the insulating film and improve the production efficiency.

In some embodiments, the connecting member is an adhesive, and on a projection plane perpendicular to a thickness direction of the insulating film, a projection of the connecting member is within a projection range of the communicating hole. In this way, the probability that the insulating film is damaged caused by the thermal management kit pulling the insulating film through the connecting member when a relative movement tendency is generated between the thermal management kit and the battery cell is reduced.

In some embodiments, the outer surface of the battery cell includes a first wall surface, where the first wall surface has at least two protrusions, the protrusions protrude in a direction away from the first wall surface, the two protrusions are spaced apart in a first direction of the first wall surface, and at least a portion of the thermal management kit is located between the two protrusions. In this way, on the one hand, the space between two adjacent protrusions is utilized, which improves the space utilization and helps reduce the overall size of the battery assembly; on the other hand, the protrusions can provide some shielding for the connecting member and the communicating hole, thereby reducing the probability of foreign objects entering the battery during long-term use, which could damage the connecting member or cause the insulating film to detach from the surface of the battery cell, thus improving the safety of use.

In some embodiments, the two protrusions are respectively located at either end of the first wall surface in the first direction. In this way, it is conducive to increasing the space between the two protrusions, so that it is easier to arrange a thermal management kit having a larger volume, which in turn improves the thermal management effect on the battery cell.

In some embodiments, the insulating film wrapping the first wall surface between the two protrusions is provided with the communicating hole. In this way, on the one hand, it is conducive to increasing sizes of the communicating hole and the connecting member, thereby being conducive to improving the connection strength between the battery cell and the thermal management kit; on the other hand, a through direction of the communicating hole is consistent with the direction in which the thermal management kit is inserted into the space between the two protrusions, thereby improving the convenience of mounting.

In some embodiments, a side surface of the protrusion facing the other protrusion is an inclined surface, the inclined surface is gradually away from the first wall surface in a direction away from the other protrusion, and the insulating film wrapping the inclined surface is provided with the communicating hole. This allows the thermal management kit to extend in the first direction to the inclined surface, enabling the connecting member to connect the inclined surface to the thermal management kit, increasing a connection area between the connecting member and the battery cell, and further improving the connection strength between the battery cell and the thermal management kit.

In some embodiments, the insulating film wrapping an end face of one side of the protrusion away from the first wall surface is provided with the communicating hole. This allows the thermal management kit to extend in the first direction to the inclined surface, enabling the connecting member to connect the inclined surface to the thermal management kit, increasing a connection area between the connecting member and the battery cell, and further improving the connection strength between the battery cell and the thermal management kit.

In some embodiments, the communicating hole extends in the first direction to the insulating film wrapping the end face of the side of the protrusion away from the first wall surface. In this way, during wrapping of the insulating film, a part of the communicating hole corresponding to the first wall surface, a part of the communicating hole corresponding to the inclined surface, and a part of the communicating hole corresponding to the end face of the side of the protrusion away from the first wall surface can be formed in one step, which simplifies production steps and improves the production efficiency.

In some embodiments, the outer surface of the battery cell is provided with an explosion-proof valve, the insulating film includes a fracture region, an impact strength of the fracture region is lower than an impact strength of another part of the insulating film, and the fracture region covers an outer side of the explosion-proof valve. In this way, by setting up the fracture region, high-temperature and high-pressure gas discharged from the explosion-proof valve can break through the insulating film more quickly, thereby reducing the risk of explosion of the battery cell and improving safety.

In some embodiments, the insulating film is provided with a plurality of pre-fracture holes, and the plurality of pre-fracture holes are arranged in a ring at intervals to jointly enclose the fracture region. In this way, under the impact of the gas discharged from the explosion-proof valve, the insulating film between two adjacent pre-fracture holes is more likely to tear, thereby reducing the risk of explosion of the battery cell and improving safety.

In some embodiments, the outer surface of the battery cell is provided with an explosion-proof valve, the insulating film is provided with a pressure relief hole penetrating through in its thickness direction, and the explosion-proof valve is fitted through the pressure relief hole. In this way, the gas discharged from the explosion-proof valve is allowed to be discharged directly through the insulating film, thereby reducing the risk of explosion of the battery cell and improving safety.

The embodiments of the present disclosure further provide a battery, including a box body and the battery assembly according to any one of the above embodiments. The box body includes a mounting space, and the battery assembly is located in the mounting space. In this way, by directly connecting the battery cell to the thermal management kit assembly by the connecting member passing through the communicating hole, the connection strength between the battery cell and the thermal management kit is improved, thus enhancing the safety of using the battery.

The embodiments of the present disclosure further provide an electrical apparatus, including the battery according to the above embodiment. The battery serves as a power source for the electrical apparatus. In this way, by using the battery of the battery assembly in the above embodiment, the safety of using the electrical apparatus is improved.

### BRIEF DESCRIPTION OF DRAWINGS

FIG. 1 is a schematic diagram of an electrical apparatus being a vehicle according to an embodiment of the present disclosure;
FIG. 2 is a schematic diagram of a battery according to an embodiment of the present disclosure;
FIG. 3 is a schematic diagram of a battery assembly in a first perspective according to a first embodiment of the present disclosure;
FIG. 4 is an exploded schematic diagram of the embodiment in FIG. 3;
FIG. 5 is a schematic diagram of a battery assembly in a second perspective according to a second embodiment of the present disclosure;
FIG. 6 is a schematic sectional diagram along a position A-A of FIG. 5;
FIG. 7 is a partially enlarged schematic diagram of a position B in FIG. 6;
FIG. 8 is a schematic deployment diagram of an insulating film and a battery cell according to a third embodiment of the present disclosure;
FIG. 9 is a schematic diagram of a battery cell according to an embodiment of the present disclosure;
FIG. 10 is a schematic deployment diagram of an insulating film and a battery cell according to a fourth embodiment of the present disclosure;
FIG. 11 is a schematic deployment diagram of an insulating film and a battery cell according to a fifth embodiment of the present disclosure;
FIG. 12 is a schematic diagram of the embodiment in FIG. 5 in a third perspective;
FIG. 13 is a schematic sectional diagram along a position C-C of FIG. 12;
FIG. 14 is an enlarged schematic diagram of a position D in FIG. 13;
FIG. 15 is a schematic sectional diagram of a battery assembly according to a sixth embodiment of the present disclosure, with a sectional position consistent with the position in the embodiment of FIG. 13;
FIG. 16 is an enlarged schematic diagram of a position E in FIG. 15;
FIG. 17 is a partially enlarged schematic diagram of a battery assembly according to a seventh embodiment of the present disclosure, with an enlarged position consistent with the position in the embodiment of FIG. 16;
FIG. 18 is a schematic sectional diagram of a battery assembly according to an eighth embodiment of the present disclosure, with a sectional position consistent with the position in the embodiment of FIG. 13;
FIG. 19 is an enlarged schematic diagram of a position F in FIG. 18;
FIG. 20 is a partially enlarged schematic diagram of a battery assembly according to a ninth embodiment of the present disclosure, with an enlarged position consistent with the position in the embodiment of FIG. 19;
FIG. 21 is a schematic diagram of a battery assembly and an insulating film according to a tenth embodiment of the present disclosure;
FIG. 22 is a partially enlarged schematic diagram of a position G in FIG. 21; and
FIG. 23 is a schematic diagram of a battery assembly and an insulating film according to an eleventh embodiment of the present disclosure.

### List of reference numerals:

1000. Vehicle; 100. Battery; 200. Controller; 300. Motor; 50. Box body; 50a. Mounting space; 51. Top cover; 52. Bottom cover;
10. Battery cell; 10a. First wall surface; 10b. Second wall surface; 10c. Protrusion; 10d. Inclined surface; 11. Case; 12. Electrode assembly; 13. Explosion-proof valve; 14. Terminal post; 20. Insulating film; 20a. Communicating hole; 20b. Fracture region; 20c. Pre-fracture hole; 20d. Pressure relief hole; 20e. Clearance hole; 30. Connecting member; 40. Thermal management kit.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

Unless otherwise defined, all technical and scientific terms used herein have the same meanings as commonly understood by those skilled in the art in the present application. The terms used herein are intended only for the purpose of describing specific embodiments and are not intended to limit the present disclosure. The terms "including" and "having" and any variants thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

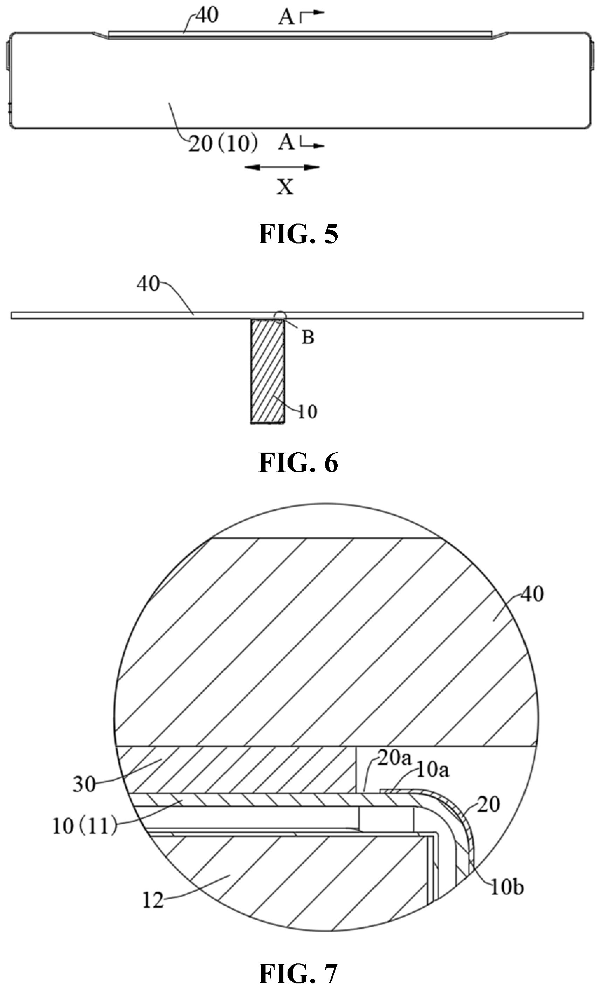

In the description of the embodiments of the present disclosure, for ease of explanation, as shown in FIG. 5, FIG. 8 and FIG. 9, a direction in which an arrow X is located is referred to as a "first direction".

In the description of the embodiments of the present disclosure, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium or may be a communication between the interior of two elements or the interaction of two elements. For those of ordinary skill in the art, the specific meanings of the above terms in the embodiments of the present disclosure can be understood according to specific situations.

In the description of the embodiments of the present disclosure, unless otherwise expressly specified or qualified, the technical term "contact" shall be understood broadly, may refer to a direct contact, or a contact through an intermediate media layer, or a contact that is between two parts in contact and is substantially free of interacting force, or a contact that is between two parts in contact and has an interacting force.

At present, batteries are increasingly widely applied in daily life and industry. Batteries are not only applied in energy storage power systems such as hydropower, thermal power, wind power, and solar power stations, but also widely applied in electric vehicles such as electric bicycles, electric motorcycles, and electric cars, as well as aerospace and other fields. With continuous expansion of the application field of batteries, a demand therefor in the market is also constantly increasing.

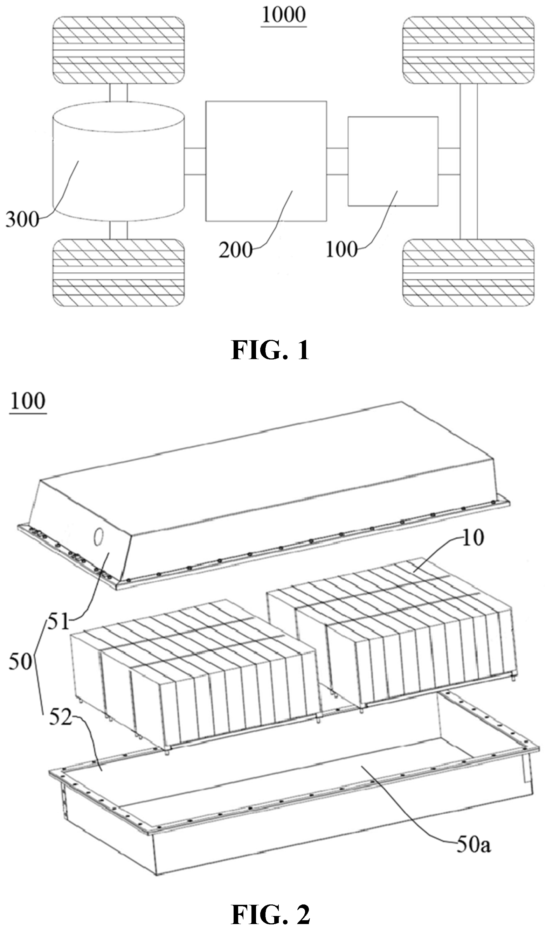

FIG. 2 is a schematic three-dimensional exploded diagram of a battery 100 according to an embodiment of the present disclosure. As shown in FIG. 2, the battery 100 includes a box body 50 and at least one battery cell 10.

The box body 50 includes a top cover 51 and a bottom cover 52, and the top cover 51 covers the bottom cover 52 from above, so that a mounting space for placing the battery cell 10 is enclosed by the bottom cover 52 and the top cover 51.

In the battery 100, there may be a plurality of battery cells 10, and the plurality of battery cells 10 may be connected in series, in parallel, or in parallel-series, and the parallel-series connection means that the plurality of battery cells 10 are connected in both series and parallel. The plurality of battery cells 10 may be directly connected in series or parallel or in parallel-series connection, and then the entirety composed of the plurality of battery cells 10 may be placed in the accommodating space formed by the bottom cover 52 and the top cover 51. Of course, the battery 100 may also be in such a form where a plurality of battery cells 10 are connected in series or parallel or in parallel-series connection to constitute a battery module, and then a plurality of battery modules are connected in series, parallel, or in parallel-series connection to form an entirety and accommodated in the accommodating space formed by the bottom cover 52 and the top cover 51. The battery 100 may further include other structures. For example, the battery 100 may further include a bus component for electrically connecting the plurality of battery cells 10.

The battery cell 10 involved in the embodiments of the present disclosure includes an electrode assembly and an electrolytic solution, and the electrode assembly is composed of a positive electrode plate, a negative electrode plate, and a separator. The operation of the battery cell 10 mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer. The current collector not coated with the positive electrode active material layer protrudes from the current collector coated with the positive electrode active material layer. The current collectors not coated with the positive electrode active material layer are stacked and serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. The negative electrode active material layer is coated on a surface of the negative electrode current collector. The current collector not coated with the negative electrode active material layer protrudes from the current collector coated with the negative electrode active material layer. The current collectors not coated with the negative electrode active material layer are stacked and serve as a negative tab. The material of the negative electrode current collector may be copper, and the negative electrode active material may be carbon, silicon, or the like. The separator may be made of a material such as polypropylene (PP) or polyethylene (PE). In addition, the electrode assembly may have a wound structure or a stacked structure.

The battery cell 10 may be a secondary battery. The secondary battery refers to a battery cell 10 that can be used continuously by activating an active material by means of charging after the battery cell 10 is discharged.

The battery cell 10 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like, which is not limited in the embodiments of the present disclosure.

The battery cell 10 may be a cylindrical battery cell, a prismatic battery cell, a pouch cell, or in other shapes. The prismatic battery cell includes a square battery cell, a blade battery cell, and a multi-prism battery. For example, the multi-prism battery may be a hexagonal prism battery, or the like, which is not specifically limited in the embodiments of the present disclosure.

The battery 100 mentioned in the embodiments of the present disclosure refers to a single physical module including one or a plurality of battery cells 10 to provide a higher voltage and capacity.

An electrical apparatus involved in the embodiments of the present application uses the above battery as a power source, and the electrical apparatus may be, but is not limited to, a mobile phone, a tablet, a notebook, an electric toy, an electric tool, a battery vehicle, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

For the convenience of description in the following embodiment, an electrical apparatus being a vehicle 1000 according to an embodiment of the present disclosure is taken as an example for the description. Description is provided below with reference to the drawings.

FIG. 1 is a schematic structural view of a vehicle 1000 according to an embodiment of the present disclosure. The vehicle 1000 may be a fuel vehicle, a gas vehicle, or a new energy vehicle, and the new energy vehicle may be an all-electric vehicle, a hybrid vehicle, an extended range electric vehicle, or the like. As shown in FIG. 1, the vehicle 1000 is provided with a battery 100 inside. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation, and driving of the vehicle 1000.

In some embodiments, the battery 100 may not only be used as the operating power source for the vehicle 1000, but also as a driving power source for the vehicle 1000, to replace or partially replace fuel or natural gas to provide driving power for the vehicle 1000.

The embodiments of the present disclosure are described in detail below.

In related technologies, a battery is provided with a plurality of battery cells, and an outer surface of each of the battery cells is covered with an insulating film. The insulating films wrapping two adjacent battery cells are attached to each other. The insulating film prevents direct contact between two adjacent battery cells, and the insulating film has insulating properties, thereby reducing the probability of problems such as breakage due to static electricity or other factors between adjacent battery cells. At the same time, the insulating film provides a certain degree of protection, thereby reducing the probability that the surface of the battery cell is damaged due to mutual friction or friction with another component in the battery.

The battery further includes a thermal management kit, and the thermal management kit is attached to the insulating film to allow heat exchange between the thermal management kit and the battery cell through the insulating film. This keeps an operating temperature of the battery cell within a suitable range, allowing charging and discharging performance of the battery cell to be fully utilized.

In related technologies, the thermal management kit is fixed to the insulating film, and the insulating film is fixed to the battery cell.

It is understandable that in some battery usage scenarios, such as battery use in vehicles, under the influence of external vibration and impact, the thermal management kit and the insulating film, as well as the insulating film and the battery cell, may experience relative movement. This will exert a pulling force on the insulating film, which may cause the insulating film to be torn. Furthermore, it will cause changes in the relative position between the thermal management kit and the battery cell, which is not conducive to temperature regulation of the thermal management kit on the battery cell.

To address the above issues, the present disclosure provides a battery assembly with a communicating hole provided in an insulating film. A connecting member fitted through the communicating hole directly connects a battery cell and a thermal management kit, thereby improving a connection strength between the battery cell and the thermal management kit.

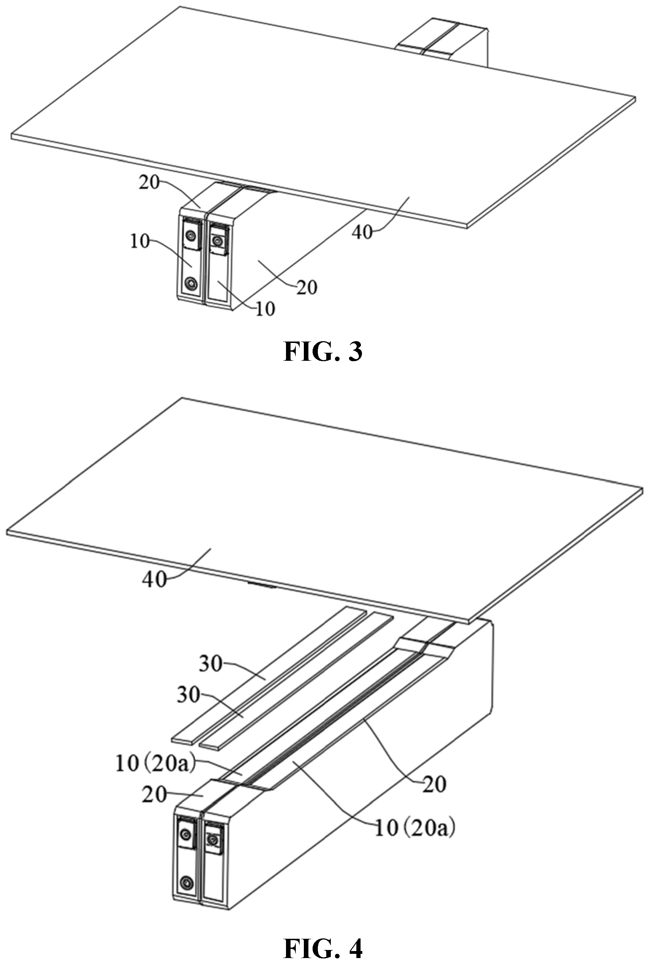

Specifically, referring to FIG. 3 to FIG. 7, the battery assembly provided in an embodiment of the present disclosure includes a battery cell 10, an insulating film 20, a connecting member 30, and a thermal management kit 40.

The battery cell 10 is a unit that is capable of achieving the charging and discharging functions in the battery.

The insulating film 20 covers an outer surface of the battery cell 10. On the one hand, it is capable of insulating the battery cell 10, thereby reducing adverse effects on safe operation of the battery cell 10 caused by factors such as leakage current in the battery cell 10 and static electricity generated by other components in the battery. On the other hand, the insulating film 20 is capable of protecting the outer surface of the battery cell 10 to a certain extent, and at the same time, increasing the friction, which can reduce the probability of relative movement between the battery cell 10 and another battery cell 10 or another component in the battery.

A specific material type of the insulating film 20 is not limited, such as polyethylene glycol terephthalate (PET).

The insulating film 20 wrapping the outer surface of the battery cell 10 may be the insulating film 20 being completely attached to the outer surface of the battery cell 10; or a portion of the insulating film 20 being attached to the battery cell 10 while the other portion being spaced apart from the outer surface of the battery cell 10, so that the insulating film 20 can be bent or avoid the structure on the surface of the battery cell 10.

The insulating film 20 is provided with a communicating hole 20a penetrating through in its thickness direction.

The thickness direction of the insulating film 20 refers to a direction perpendicular to an extended laying surface of the insulating film 20.

The connecting member 30 is at least partially arranged in the communicating hole 20a. In other words, the connecting member 30 may be partially located in the communicating hole 20a or it may be entirely located in the communicating hole 20a.

The thermal management kit 40, the thermal management kit 40 achieves the purpose of heat energy exchange with the battery cell 10 by conveying a fluid, thereby dissipating or heating the battery cell 10 and maintaining the temperature of the battery cell 10 within a suitable temperature range. This reduces the probability of thermal runaway of the battery cell 10 due to overcharging, over-discharging, puncture, drop, impact, and the like, and also helps the battery cell 10 operate normally in a low-temperature state.

The connecting member 30 connects the thermal management kit 40 to the battery cell 10. In other words, on the one hand, the connecting member 30 itself forms a heat conduction path, so that heat exchange may be achieved between the thermal management kit 40 and the battery cell 10 through the connecting member 30; on the other hand, the connection achieved using the connecting member 30 is capable of fixing the relative positions between the thermal management kit 40 and the battery cell 10.

The battery assembly in the embodiments of the present disclosure directly connects the thermal management kit 40 to the battery cell 10 through the connection in the communicating hole 20a. On the one hand, this eliminates the need for the insulating film 20 to be additionally connected to the thermal management kit 40, thereby reducing the probability that the insulating film is damaged 20 due to a relative movement tendency generated between the thermal management kit 40 and the battery cell 10. This also improves the connection strength between the battery cell 10 and the thermal management kit 40, so that relative positions between the battery cell 10 and the thermal management kit 40 are more stable. On the other hand, this allows heat exchange between the thermal management kit 40 and the battery cell 10 to occur only through the connecting member 30, thereby being conducive to improving the efficiency of heat exchange.

The specific type of thermal management kit 40 is not limited. For example, thermal management kit 40 is a water-cooling plate, and the water-cooling plate is provided with a water-cooling channel therein. Water flows in the water-cooling channel, and the water is used as a heat storage medium to absorb or release heat at different positions in the water-cooling channel, thereby achieving the purpose of temperature control of the battery cell 10 by the water-cooling plate.

The specific shape of the communicating hole 20a is not limited, such as circular, and rectangular.

The number of the communicating holes 20a is not limited, and one or a plurality of communicating holes may be provided.

In some embodiments, a portion of the insulating film 20 is excavated to form a communicating hole 20a. In this way, it is easy to form a communicating hole 20a in any shape by excavation.

The excavation method used is not limited. For example, a communicating hole 20a is formed by punching a hole in the complete insulating film 20, and the insulating film 20 wraps the outer surface of the battery cell 10.

In some embodiments, referring to FIG. 6 to FIG. 9, the outer surface of the battery cell 10 includes a first wall surface 10a, the insulating film 20 covers a portion of the first wall surface 10a, and the insulating film 20 wrapping the first wall surface 10a encloses a communicating hole 20a.

A wall surface refers to any one of surfaces that form the outer surface of the battery cell 10, which may be a plane or a curved surface. Shapes of the wall surfaces may be the same, different, or partially the same and partially different.

The first wall surface 10a is one or some of the wall surfaces of the battery cell 10.

A portion of the first wall surface 10a is covered by the insulating film 20, while the other portion faces directly to the outside.

The insulating film 20 wrapping the first wall surface 10a encloses the communicating hole 20a. In other words, an edge sidewall of the insulating film 20 wrapping the first wall surface 10a is an inner wall of the communicating hole 20a.

In this way, there is no need to additionally open a hole in the insulating film 20. On the one hand, this helps improve the integrity of the insulating film 20, enhance the structural strength of the insulating film 20, and reduce the probability of the insulating film 20 being torn by stretching during use of the battery. On the other hand, the communicating hole 20a can be formed in the process of wrapping the battery cell 10 with the insulating film 20, which helps improve the production efficiency.

It is understandable that the area of the insulating film 20 is smaller than the area of the outer surface of the battery cell 10.

The insulating film 20 may be a single piece of film that wraps around the wall surfaces of the battery cell 10; or it may be formed by splicing together a plurality of individual films.

In some embodiments, the area of the insulating film 20 is larger than the area of at least one wall surface of the battery cell 10, such that the insulating film 20 wraps one of the wall surfaces and then bends from the edge of that wall surface to wrap the other wall surface.

The insulating film 20 is fixed to the battery cell 10 by adhesive bonding.

It is understandable that a seam position between the inner wall of the communicating hole 20a and the surface of the battery cell 10 is a region having a weak adhesive structural strength, which is prone to adhesive detachment under external influences.

In some embodiments, referring to FIG. 7, FIG. 8, and FIG. 9, the outer surface of the battery cell 10 includes a second wall surface 10b, and the second wall surface 10b is connected to the first wall surface 10a. The insulating film 20 wraps the second wall surface 10b and extends to the first wall surface 10a, so that the insulating film 20 covers a connection position between the first wall surface 10a and the second wall surface 10b.

The second wall surface 10b is located on at least one side of the first wall surface 10a and the two are connected. In other words, the second wall surface 10b is adjacent to the first wall surface 10a.

After the insulating film 20 wraps the second wall surface 10b, the connection position between the second wall surface 10b and the first wall surface 10a, that is, an edge of the second wall surface 10b near the first wall surface 10a, bends toward the first wall surface 10a and wraps a portion of the first wall surface 10a, so that the insulating film 20 completely wraps the connection position between the first wall surface 10a and the second wall surface 10b. In other words, the second wall surface 10b is edge-wrapped.

As such, the seam position between the inner wall of the communicating hole 20a and the surface of the battery cell 10 is located away from the connection position between two adjacent wall surfaces of the battery cell 10. This reduces the probability of the insulating film 20 being easily detached from the outer surface of the battery cell 10 due to a change in the curvature of the connection position between the two adjacent wall surfaces. At the same time, it eliminates the need for an edge of the insulating film 20 to be aligned with the edges of various wall surfaces, which helps reduce dimensional accuracy requirements of the insulating film 20 and improve the production efficiency.

In some embodiments, the second wall surface 10b is the wall surface with the largest area on the outer surface of the battery cell 10. In other words, the second wall surface 10b is the so-called large surface of the battery cell 10.

It is understandable that, since the second wall surface 10b has the largest area, the probability of it being in contact with another object in the outside world is higher, and the probability and magnitude of the force of the insulating film 20 wrapping the second wall surface 10b being stretched and rubbed are also greater.

In this way, an abutting force between the first wall surface 10a and the insulating film 20 reduces the probability of detaching of the insulating film 20 wrapping the second wall surface 10b, thus better protecting the second wall surface 10b.

It is understandable that, referring to FIG. 4, FIG. 7, and FIG. 8, the inner wall of the communicating hole 20a is spaced apart from the edge of the first wall surface 10a.

The specific structural form of the connecting member 30 is not limited.

For example, the connecting member 30 is an adhesive. The specific type of the adhesive is not limited, such as a silicone adhesive, a polyurethane adhesive, and an acrylic adhesive, as long as it has good bonding strength and insulation properties.

In some embodiments, referring to FIG. 7 and FIG. 12 to FIG. 14, in a projection plane perpendicular to the thickness direction of the insulating film 20, a projection of the connecting member 30 is within a projection range of the communicating hole 20a.

In other words, the adhesive forming the connecting member 30 will not spread over the outer surface of the insulating film 20.

In this way, the probability that the insulating film is damaged 20 caused by the thermal management kit 40 pulling the insulating film 20 through the connecting member 30 when a relative movement tendency is generated between the thermal management kit 40 and the battery cell 10.

In some embodiments, as shown in FIG. 7, the battery cell 10 includes a case 11 and an electrode assembly 12, the case 11 is provided with an accommodating cavity, and the electrode assembly 12 is located in the accommodating cavity. The accommodating cavity is capable of storing an electrolyte solution, and charging and discharging processes of the battery cell 10 are realized through electrochemical reactions between the electrode assembly 12 and the electrolyte solution.

The electrode assembly 12 includes a tab and an electrode plate. The tab protrudes from one side of the electrode plate. The electrode plate is configured to generate an electrochemical reaction with the electrolyte solution. The tab is configured to guide input or output of electrical energy to or from the electrode plate.

It is understandable that, because the tab protrudes from one side of the electrode plate, an outer contour shape of the electrode assembly 12 is not regular.

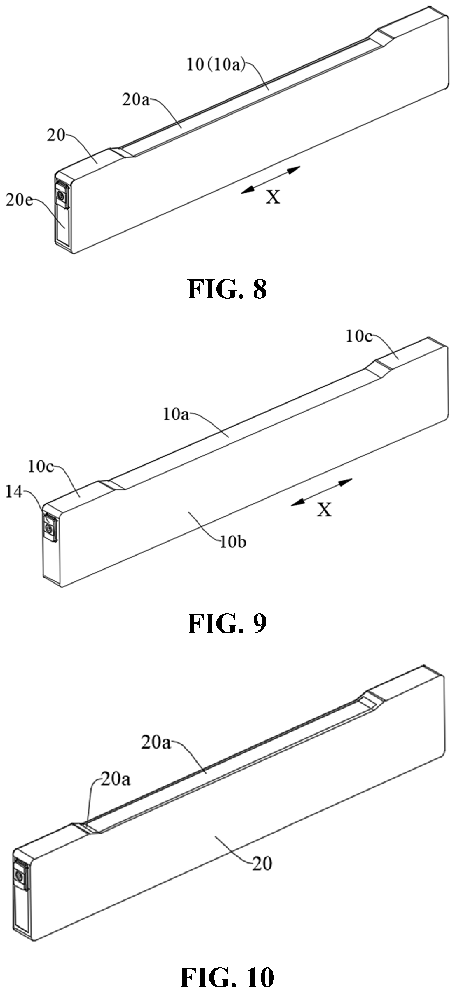

In some embodiments where the first wall surface 10a is provided, referring to FIG. 9, the first wall surface 10a is provided with a protrusion 10c, the protrusion 10c protruding in a direction away from the first wall surface 10a, such that a part of the electrode assembly 12 in the battery cell 10, such as the tab, is located in an internal space of the protrusion 10c, thereby improving the space utilization in the battery cell 10, so that the structure of the battery cell 10 is more compact, which is conducive to improving the energy density of the battery cell 10.

In some embodiments, referring to FIG. 3, FIG. 4, FIG. 5, FIG. 8, and FIG. 9, the first wall surface 10a is provided with at least two protrusions 10c, where the two protrusions 10c are spaced apart in a first direction of the first wall surface 10a, and at least a portion of the thermal management kit 40 is located between the two protrusions 10c. In other words, at least a portion of the connecting member 30 and at least a portion of the communicating hole 20a are located between the two protrusions 10c.

In this way, on the one hand, the space between two adjacent protrusions 10c is utilized, which improves the space utilization and helps reduce the overall size of the battery assembly; on the other hand, the protrusions 10c can provide some shielding for the connecting member 30 and the communicating hole 20a, thereby reducing the probability of foreign objects entering the battery during long-term use, which could damage the connecting member 30 or cause the insulating film 20 to detach from the surface of the battery cell 10, thus improving the safety of use.

The specific direction of the first direction is not limited. For example, the battery cell 10 is square, and the first direction is a length direction of the battery cell 10; or the first direction is a width direction of the battery cell 10.

In some embodiments, referring to FIG. 9, the two protrusions 10c are respectively located at either end of the first wall surface 10a in the first direction.

In this way, it is conducive to increasing the space between the two protrusions 10c, so that it is easier to arrange a thermal management kit 40 having a larger volume, which in turn improves the thermal management effect on the battery cell 10.

In some embodiments, referring to FIG. 8, the insulating film 20 wrapping the first wall surface 10a between the two protrusions 10c is provided with the communicating hole 20a.

In other words, the through direction of the communicating hole 20a is the same as the protruding direction of the protrusion 10c.

In this way, on the one hand, it is conducive to increasing sizes of the communicating hole 20a and the connecting member 30, thereby being conducive to improving the connection strength between the battery cell 10 and the thermal management kit 40; on the other hand, the through direction of the communicating hole 20a is made identical to the direction of the thermal management kit 40 mounting into the space between the two protrusions 10c, thereby improving the convenience of mounting.

In an embodiment provided with the case 11, the protrusions 10c may be formed by stamping.

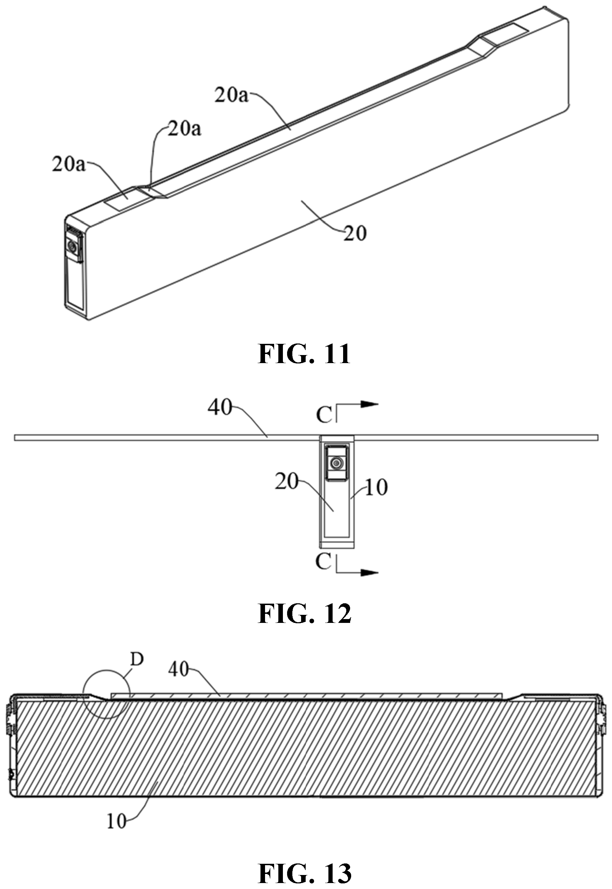

In some embodiments, referring to FIG. 13 to FIG. 20, a side of one protrusion 10c facing toward the other protrusion 10c is an inclined surface 10d, and the inclined surface 10d is gradually away from the first wall surface 10a in a direction away from the other protrusion 10c.

Thus, on the one hand, in the stamping process of forming the protrusion 10c, the inclined surface 10d facilitates demolding from the stamping die; on the other hand, it helps reduce the probability of stress concentration between the structure forming the inclined surface 10d on the battery cell 10 and the structure forming the first wall surface 10a, thereby improving the structural strength of the battery cell 10.

In some embodiments, referring to FIG. 8, FIG. 15, and FIG. 16, the insulating film 20 wraps the entire inclined surface 10d to increase the area of the insulating film 20 wrapping the outer surface of the battery cell 10, thereby improving the protective and insulating effects of the insulating film 20 on the battery cell 10.

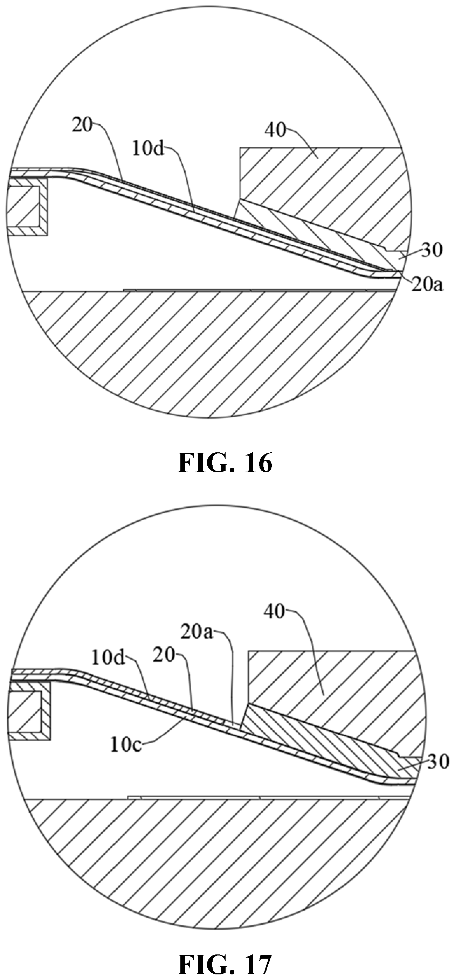

In some embodiments, referring to FIG. 16 and FIG. 17, at least a portion of a projection of the thermal management kit 40 coincides with a projection of the inclined surface 10d in a projection plane perpendicular to the protruding direction of the protrusion 10c. This allows for a further increase in the volume of the thermal management kit 40, thereby further improving the thermal management effect of the thermal management kit 40 on the battery cell 10.

It is understandable that, referring to FIG. 16 and FIG. 17, a portion of the surface of the thermal management kit 40 facing toward the battery cell 10 is inclined to fit with the inclined surface 10d, so that the thermal management kit 40 is capable of being attached to the inclined surface 10d for better thermal management of the battery cell 10.

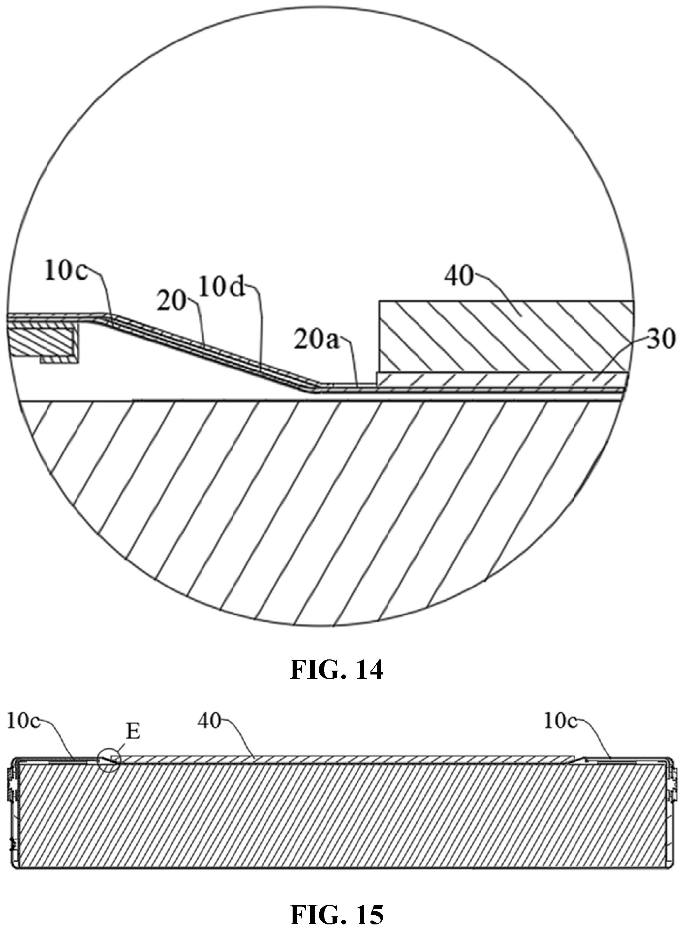

In some embodiments, referring to FIG. 10 and FIG. 14, the insulating film 20 wrapping the inclined surface 10d is provided with the communicating hole 20a. In other words, the insulating film 20 wraps only a portion of the inclined surface 10d so that at least a portion of the communicating hole 20a is configured to correspond to the inclined surface 10d.

This allows the thermal management kit 40 to extend in the first direction to the inclined surface 10d, enabling the connecting member 30 to connect the inclined surface 10d to the thermal management kit 40, increasing a connection area between the connecting member 30 and the battery cell 10, and further improving the connection strength between the battery cell 10 and the thermal management kit 40.

In some embodiments, referring to FIG. 10, the communicating hole 20a extends in the first direction from the portion of the insulating film 20 wrapping the first wall surface 10a to the portion of the insulating film 20 wrapping the inclined surface 10d. In this way, in the process of wrapping the insulating film 20, the portion of the communicating hole 20a corresponding to the first wall surface 10a and the portion of the communicating hole 20a corresponding to the inclined surface 10d can be formed in one step, which simplifies production steps and improves the production efficiency.

In some embodiments, referring to FIG. 8, FIG. 10, FIG. 18, and FIG. 19, the insulating film 20 wraps the entire end face of one side of the protrusion 10c away from the first wall surface 10a to increase the area of the insulating film 20 wrapping the outer surface of the battery cell 10, thereby improving the protective and insulating effects of the insulating film 20 on the battery cell 10.

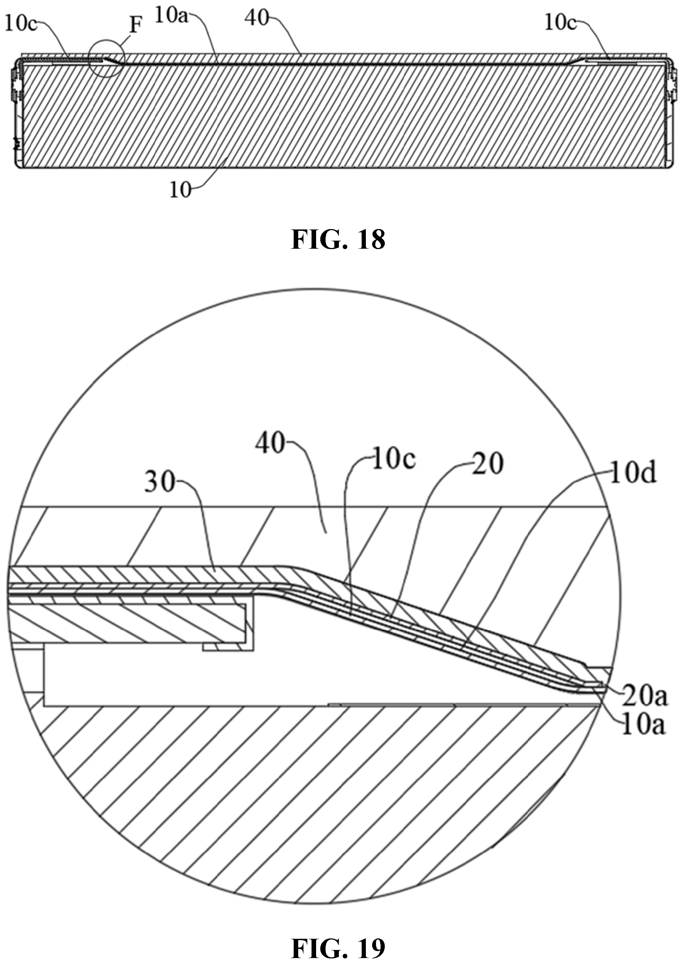

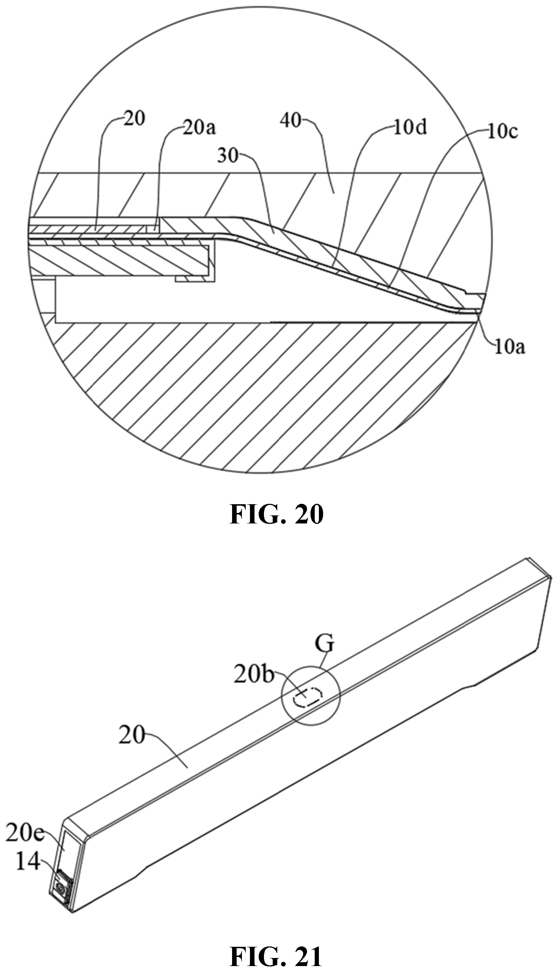

In some embodiments, referring to FIG. 19 and FIG. 20, at least a portion of the projection of the thermal management kit 40 coincides with a projection of the end face of the side of the protrusion 10c away from the first wall surface 10a in the projection plane perpendicular to the protruding direction of the protrusion 10c. This allows for a further increase in the volume of the thermal management kit 40, thereby further improving the thermal management effect of the thermal management kit 40 on the battery cell 10.

In some embodiments, referring to FIG. 11 and FIG. 20, the insulating film 20 wrapping the end face of the side of the protrusion 10c away from the first wall surface 10a is provided with the communicating hole 20a.

In other words, the insulating film 20 only wraps a portion of the end face of the side of the protrusion 10c away from the first wall surface 10a, so that at least a portion of the communicating hole 20a is configured to correspond to the end face of the side of the protrusion 10c away from the first wall surface 10a.

This allows the thermal management kit 40 to extend in the first direction to correspond with the end face of the side of the protrusion 10c away from the first wall surface 10a, enabling the connecting member 30 to connect the end face of the side of the protrusion 10c away from the first wall surface 10a and the thermal management kit 40. This further increases the connection area between the connecting member 30 and the battery cell 10, and further improves the connection strength between the battery cell 10 and the thermal management kit 40.

In some embodiments, referring to FIG. 11 and FIG. 19, the communicating hole 20a extends in the first direction to the insulating film 20 wrapping the end face of the side of the protrusion 10c away from the first wall surface 10a.

In this way, in the process of wrapping the insulating film 20, a part of the communicating hole 20a corresponding to the first wall surface 10a, a part of the communicating hole 20a corresponding to the inclined surface 10d, and a part of the communicating hole 20a corresponding to the end face of the side of the protrusion 10c away from the first wall surface 10a can be formed in one step, which simplifies production steps and improves the production efficiency.

It is understandable that the outer surface of the battery cell 10 is provided with various components configured to cooperate or function with other components in the battery.

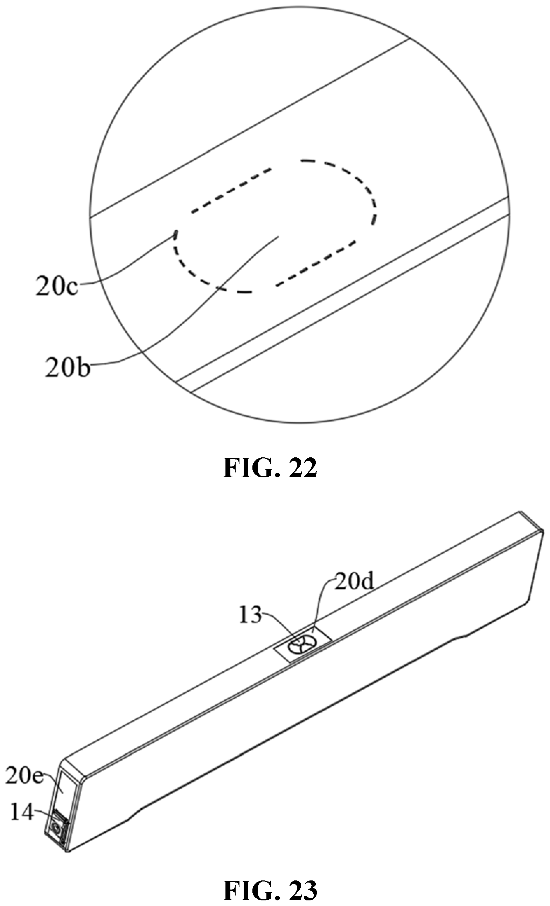

In some embodiments, referring to FIG. 21 and FIG. 22, the outer surface of the battery cell 10 is provided with an explosion-proof valve 13, the insulating film 20 includes a fracture region 20b, an impact strength of the fracture region 20b is lower than an impact strength of another part of the insulating film 20, and the fracture region 20b covers an outer side of the explosion-proof valve 13.

The explosion-proof valve 13 has an open state and a closed state. When the battery cell 10 operates normally, the explosion-proof valve 13 is in the closed state, keeping the space inside the battery cell 10 sealed and preventing foreign objects from entering. In a case of thermal runaway of the battery cell 10, generated high-temperature and high-pressure gas can trigger the explosion-proof valve 13 to switch from the closed state to the open state, thereby allowing the high-temperature and high-pressure gas to be discharged from the battery cell 10 through the explosion-proof valve 13, thus reducing the probability of explosion of the battery cell 10.

The impact strength is used to evaluate an impact resistance of a material or to determine brittleness and toughness of the material.

When the explosion-proof valve 13 is in the closed state, the fracture region 20b acts as a shield for the explosion-proof valve 13, reducing the external entering the explosion-proof valve 13 and affecting opening and closing functions of the explosion-proof valve 13. When the explosion-proof valve 13 is in the open state, the high-temperature and high-pressure gas discharged from the explosion-proof valve 13 impacts the insulating film 20. The impact strength of the fracture region 20b is lower, and therefore, the fracture region 20b is more likely to rupture than other parts of the insulating film 20, which in turn causes the high-temperature and high-pressure gas to spray out from a crack formed in the fracture region 20b.

In this way, by setting up the fracture region 20b, the high-temperature and high-pressure gas discharged from the explosion-proof valve 13 can break through the insulating film 20 more quickly, thereby reducing the risk of explosion of the battery cell 10 and improving safety.

The specific method for measuring the impact strength of the fracture region 20b is not limited. For example, a specimen is fixed in a specimen fixture, and a punch of a pendulum-type film impact tester is allowed to impact and pass through the fracture region 20b at a certain speed. Energy consumed by the punch is measured, and the impact strength of the fracture region 20b can be calculated.

The specific method of forming the fracture region 20b is not limited.

For example, referring to FIG. 21 and FIG. 22, the insulating film 20 is provided with a plurality of pre-fracture holes 20c, and the plurality of pre-fracture holes 20c are arranged in a ring at intervals to jointly enclose the fracture region 20b.

The portion of the insulating film 20 between two adjacent pre-fracture holes 20c has a lower impact strength compared with other portions of the insulating film 20.

In this way, under the impact of the gas discharged from the explosion-proof valve 13, the insulating film 20 between two adjacent pre-fracture holes 20c is more likely to tear, thereby reducing the risk of explosion of the battery cell 10 and improving the safety.

The pre-fracture hole 20c may be a blind hole or a through hole.

In some embodiments where the explosion-proof valve 13 is provided, referring to FIG. 23, the insulating film 20 is provided with a pressure relief hole 20d penetrating through in its thickness direction, and the explosion-proof valve 13 is fitted through the pressure relief hole 20d.

In other words, the pressure relief hole 20d is reserved on the insulating film 20 for the explosion-proof valve 13 to pass through the insulating film 20.

In this way, the gas discharged from the explosion-proof valve 13 is allowed to be discharged directly through the insulating film 20, thereby reducing the risk of explosion of the battery cell 10 and improving the safety.

In some embodiments, referring to FIG. 9 and FIG. 23, the surface of the battery cell 10 is provided with a terminal post 14, and the insulating film 20 is provided with a clearance hole 20e penetrating through in its thickness direction, and the terminal post 14 is fitted through the clearance hole 20e.

The terminal post 14 is configured to be electrically connected to another component in the battery, so as to output or input electrical energy from or to the battery cell 10.

In this way, by setting the clearance hole 20e, the influence of the insulating film 20 on the conductivity of the terminal post 14 is reduced.

The communicating hole 20a, the pressure relief hole 20d, and the clearance hole 20e may be in communication with each other or may be set independently.

A battery assembly in a specific embodiment of the present disclosure is described as follows.

The battery assembly includes a battery cell 10, an insulating film 20, a connecting member 30, and a thermal management kit 40. The insulating film 20 wraps an outer surface of the battery cell 10, and the insulating film 20 is provided a communicating hole 20a penetrating through in its thickness direction. At least a portion of the connecting member 30 is arranged in the communicating hole 20a, and the connecting member 30 connects the thermal management kit 40 and the battery cell 10. The outer surface of the battery cell 10 includes a first wall surface 10a and a second wall surface 10b. The insulating film 20 wraps a portion of the first wall surface 10a, and the insulating film 20 wrapping the first wall surface 10a encloses the communicating hole 20a. The second wall surface 10b is connected to the first wall surface 10a. The insulating film 20 wraps the second wall surface 10b and extends to the first wall surface 10a. The insulating film 20 wraps a connection position between the first wall surface 10a and the second wall surface 10b. The connecting member 30 is an adhesive. On a projection plane perpendicular to the thickness direction of the insulating film 20, a projection of the connecting member 30 is within a projection range of the communicating hole 20a. The first wall surface 10a is provided with at least two protrusions 10c, the protrusions 10c protruding in a direction away from the first wall surface 10a. The two protrusions 10c are respectively located at either end of the first wall surface 10a in the first direction, and at least a portion of the thermal management kit 40 is located between the two protrusions 10c. The insulating film 20 is provided with a plurality of pre-fracture holes 20c, and the plurality of pre-fracture holes 20c are arranged in a ring at intervals to jointly enclose a fracture region 20b. Alternatively, the insulating film 20 is provided with a pressure relief hole 20d penetrating through in its thickness direction, and an explosion-proof valve 13 is fitted through the pressure relief hole 20d.

The embodiments of the present disclosure further provide a battery 100, referring to FIG. 2. The battery includes a box body 50 and the battery assembly according to any one of the above embodiments. The box body 50 includes a mounting space 50a, and the battery assembly is located in the mounting space 50a.

The box body 50 provides protection and isolation for the battery assembly, reducing the adverse effects of external factors on the charging and discharging functions of the battery assembly.

In this way, by directly connecting the battery cell 10 to the thermal management kit assembly by the connecting member 30 passing through the communicating hole 20a, the connection strength between the battery cell 10 and the thermal management kit 40 is improved, thus enhancing the safety of using the battery 100.

The embodiments of the present disclosure further provide an electrical apparatus, and the electrical apparatus includes the battery 100 according to the above embodiment. The battery 100 serves as a power source for the electrical apparatus. In other words, the battery 100 is capable of being configured to supply power to other electrical components in the electrical apparatus.

In this way, by using the battery 100 of the battery assembly in the above embodiment, the safety of using the electrical apparatus is improved.

The embodiments/implementations provided in the present disclosure may be combined with each other without contradiction.

The above are merely preferred embodiments of the present disclosure, but are not intended to limit the embodiments in the present disclosure. It will be apparent to those skilled in the art that various modifications and changes may be made to the embodiments of the present disclosure. Any modifications, equivalent replacements, and improvements made within the spirit and principle of the embodiments of the present disclosure shall be included within the scope of protection of the embodiments of the present disclosure.

## Claims

1. A battery assembly, comprising:
a battery cell; and
an insulating film wrapping an outer surface of the battery cell, wherein the insulating film is provided with a communicating hole penetrating through in its thickness direction;
a connecting member at least partially arranged in the communicating hole; and
a thermal management kit, wherein the connecting member connects the thermal management kit to the battery cell.

2. The battery assembly according to claim 1, wherein the outer surface of the battery cell comprises a first wall surface, the insulating film wraps a portion of the first wall surface, and the insulating film wrapping the first wall surface encloses the communicating hole.

3. The battery assembly according to claim 2, wherein the outer surface of the battery cell comprises a second wall surface, the second wall surface is connected to the first wall surface, and the insulating film wraps the second wall surface and extends to the first wall surface, so that the insulating film covers a connection position between the first wall surface and the second wall surface.

4. The battery assembly according to any one of claims 1 to 3, wherein the connecting member is an adhesive, and on a projection plane perpendicular to the thickness direction of the insulating film, a projection of the connecting member is within a projection range of the communicating hole.

5. The battery assembly according to any one of claims 1 to 4, wherein the outer surface of the battery cell comprises a first wall surface, the first wall surface has at least two protrusions, the protrusions protrude in a direction away from the first wall surface, the two protrusions are spaced apart in a first direction of the first wall surface, and at least a portion of the thermal management kit is located between the two protrusions.

6. The battery assembly according to claim 5, wherein the two protrusions are respectively located at either end of the first wall surface in the first direction.

7. The battery assembly according to claim 5 or 6, wherein the insulating film wrapping the first wall surface between the two protrusions is provided with the communicating hole.

8. The battery assembly according to any one of claims 5 to 7, wherein a side surface of the protrusion facing the other protrusion is an inclined surface, the inclined surface is gradually away from the first wall surface in a direction away from the other protrusion, and the insulating film wrapping the inclined surface is provided with the communicating hole.

9. The battery assembly according to any one of claims 5 to 8, wherein the insulating film wrapping an end face of one side of the protrusion away from the first wall surface is provided with the communicating hole.

10. The battery assembly according to claim 7, wherein the communicating hole extends in the first direction to the insulating film wrapping the end face of the side of the protrusion away from the first wall surface.

11. The battery assembly according to any one of claims 1 to 10, wherein the outer surface of the battery cell is provided with an explosion-proof valve, the insulating film comprises a fracture region, an impact strength of the fracture region is lower than an impact strength of another part of the insulating film, and the fracture region covers an outer side of the explosion-proof valve.

12. The battery assembly according to claim 11, wherein the insulating film is provided with a plurality of pre-fracture holes, and the plurality of pre-fracture holes are arranged in a ring at intervals to jointly enclose the fracture region.

13. The battery assembly according to any one of claims 1 to 12, wherein the outer surface of the battery cell is provided with an explosion-proof valve, the insulating film is provided with a pressure relief hole penetrating through in its thickness direction, and the explosion-proof valve is fitted through the pressure relief hole.

14. A battery, comprising a box body and the battery assembly according to any one of claims 1 to 13, wherein the box body comprises a mounting space, and the battery assembly is located in the mounting space.

15. An electrical apparatus, comprising the battery according to claim 14, wherein the battery serves as a power source for the electrical apparatus.
